# EUROPEAN PATENT APPLICATION

(11) **EP 1 514 724 A2**
(43) Date of publication of application: **16.03.2005**
(21) Application number: 04396063.2
(22) Date of filing: 15.09.2004
(51) Int. Cl.: B60N 2/015

(54) **Fastening system and its use**

(30) Priority: 15.09.2003 FI 20031314
(71) Applicant: Rego Autodesign Oy, 36760 Luopioinen (FI)
(72) Inventor: Kekola, Jorma, 27320 Ihode (FI); Heikkinen, Seppo Juhani, 36760 Luopioinen (FI)
(74) Representative: Tanskanen, Jarmo Tapio

(57) **Abstract**

A fastening system comprising an elongated profiled rail (3) fastened to a fixed base (2) and having a groove (4) with two opposite side walls (6, 7); and locking element (9) connected to a mount (7) and fitted to the groove (4) of the profiled rail (3). The locking element (9) comprises stop faces (10, 11) which can be pressed against the side walls (6, 7) of the groove (4) to produce frictional engagement. The side walls (6, 7) of the groove (4) comprise first wedge surfaces (12, 13), which are mutually disposed at an angle (α) opening towards the fixed base (2). The stop faces (10, 11) of the locking element (9) constitute second wedge surfaces (14, 15) mutually disposed at a corresponding angle. The frictional engagement produced by the wedge surfaces grows stronger as the load increases, due to the wedging effect. The fastening system comprises a supporting element (16) fastened to the mount and fitted to be supported on the profiled rail (3). A spring (17) has been arranged to act between the mount (8) and the locking element (9) to press the wedge surfaces (12, 13; 14, 15) against each other. Using a releasing device (18), the locking element (9) can be moved against the spring force of the spring (17) from a locked position (I) to a released position (II) to separate the wedge surfaces from each other.

## Description

### FIELD OF THE INVENTION

The present invention relates to a fastening system as defined in the preamble of claim 1.

### BACKGROUND OF THE INVENTION

In prior art, a fastening system for detachably fastening an object to a fixed base by frictional engagement is known. Such a system comprises an elongated profiled rail fitted to be fastened to the fixed base. The profiled rail comprises a groove with an interior space defined by a bottom and laterally two opposite side walls. The system further comprises a mount to which the object is connected and a locking element connected to the mount and fitted to the groove of the profiled rail. The locking element comprises stop faces facing away from each other, which can be pressed against the side walls of the groove to produce frictional engagement between the locking element and the profiled rail.

In certain prior-art systems, the locking element is an eccentric element which is turned to press it against the bottom and side walls of the groove.

In another prior-art system (manufactured by Vogelsitze Gmbh, Germany), the locking element consists of a fastening piece provided in the groove, which is tightened with a bolt so that the fastening piece is pressed against the lower surfaces of the edge flanges of the groove.

A problem with prior-art fastening arrangements using frictional engagement is that they are difficult to use. Releasing the engagement requires the use of a tool to turn the bolt or eccentric element and is a difficult and time-consuming operation.

### OBJECT OF THE INVENTION

The object of the present invention is to overcome the drawbacks referred to above.

A specific object of the invention is to disclose a fastening system based on frictional engagement that is structurally as simple and cheap as possible and that can be released very easily without special tools to move an object on a base along a profiled rail to a desired position, where it can then be quickly locked in place.

A further object of the invention is to disclose a fastening system for use in vehicles.

### BRIEF DESCRIPTION OF THE INVENTION

The fastening system of the invention is characterized by what is disclosed in claim 1.

According to the invention, the side walls of the groove comprise first wedge surfaces, which are of planar form and placed at an angle relative to each other, said angle opening towards a fixed base. The stop faces of the locking element are planar and at a sharp angle relative to each other, said angle opening towards the fixed base and being substantially equal to the angle between the first wedge surfaces, said stop faces constituting second wedge surfaces, which can be pressed against the first wedge surfaces so that the frictional engagement produced will grow stronger as the load increases, due to the wedging effect. The fastening system comprises a supporting element, which is fastened to the mount and fitted to be supported on the profiled rail. A spring has been arranged to act between the mount and the locking element to press the second wedge surfaces against the first wedge surfaces. A releasing device has been arranged to act on the locking element to move the locking element relative to the mount against the spring force of the spring from a locked position, in which the second wedge surfaces lie against the first wedge surfaces, to a released position, in which the second wedge surfaces are separated from the first wedge surfaces and in which released position the mount can be moved along the profiled rail.

The locking element is continuously held under tension by the spring force so that the wedge surfaces are constantly in contact with each other. The spring force of the spring has been so adapted that the frictional force between the wedge surfaces will be sufficient to hold the object in position in a normal situation. The disengagement needed in order to move the object is effected by pressing the locking element with a releasing device against the spring force of the spring to separate the wedge surfaces from each other, thus allowing the locking element to move in the groove of the floor rail. In the locked position, the wedge surfaces of the load are wedged more and more tightly against each other.

The fastening system can be used in a wide variety of applications. It has been primarily developed for moving vehicles, but is it is also applicable for use in buildings to fasten various pieces of furniture to the floor or to the walls. The system can be used in land vehicles, such as automobiles, e.g. in spacious taxi cabs, minibuses, cars, buses etc., for fastening different pieces of furniture, such as seats and tables and other interior furnishing equipment. Further, it can be used in rail vehicles, such as trains, tram cars, subway cars etc., in waterborne vehicles, such as ships, hydrofoil vessels, hovercraft, boats etc., and/or in airborne vehicles, such as airliners.

Especially as regards the use of the invention in conjunction with vehicles, it is to be noted that vehicles are provided with long profiled rails fixed to the floor and extending in the direction of travel, which rails are designed for fastening a row of seats and/or other furniture and equipment to the floor so that individual seats or other pieces of furniture and equipment can be easily moved along the profiled rail to a desired position and locked there in place. Similarly, it may sometimes be necessary to reverse the facing direction of the seat. In the arrangement of the invention, these operations are simple and easy to carry out without special tools.

In vehicles, especially automobiles, it is additionally required that the seat mounting withstand the loads it is subjected to in a collision situation so that the seat will not move from its place in a collision. By using the fastening system of the invention, a seat, as well as any other piece of equipment or furniture, can be so fastened to the automobile that, due to the wedging effect, the fastening will become the stronger the greater is the load applied to it. As the wedge surfaces are wedged against each other, this increases the frictional force between them and strengthens the fastening. In a vehicle, a seat fastened according to the invention may be a seat provided with a 2-, 3- or 4-point safety belt, so in a collision situation the fastening will be subjected to very large forces. Based on tensile tests performed in accordance with relevant norms, the fastening arrangement of the invention meets very well the requirements imposed by the norms on the fastening of seats.

In an embodiment of the system, the locking element has been arranged to be movable relative to the mount at a sharp angle with respect to the longitudinal direction of the profiled rail.

In an embodiment of the system, the locking element is an elongated profiled body, which is connected to the mount by a pin-and-slot joint comprising an elongated slot disposed at a sharp angle relative to the longitudinal direction of the profiled rail.

In an embodiment of the system, the slot of the pin-and-slot joint is comprised in the mount and the pin is comprised in the locking element.

In an embodiment of the system, the supporting element has been formed from a material having a low coefficient of friction against the profiled rail to allow the mount to slide on the profiled rail.

In an embodiment of the system, the mount comprises two or more successive locking elements placed in the groove of the same profiled rail.

In an embodiment of the system, the releasing device has been fitted to act on all the locking elements.

In an embodiment of the system, the releasing device comprises a turning lever pivotally connected to the mount by a joint, and transmission elements for translating the motion of the turning lever into a motion of the locking element.

In an embodiment of the system, the fastening system comprises two locking elements, which are supported on the mount at a distance from each other. The transmission elements comprise a connecting bar connecting the locking elements to each other, and a connecting lever pivotally connected at one end to the connecting bar and at the other end pivotally connected to the turning lever at a distance from the joint.

In an embodiment of the system, the fastening system comprises two profiled rails, which are fastened to the base so that they lie parallel to each other at a distance from each other. The system further comprises two mounts provided with locking elements and releasing devices, said mounts being fixedly connected to each other by at least one transverse bar so that they are mutually spaced by a distance corresponding to the distance between the profiled rails, the object being fastened to said mounts. An operating handle is connected to the releasing devices of both mounts to allow them to be operated simultaneously by a single movement of the operating handle.

In an embodiment of the system, the object is a piece of furniture and/or equipment in a vehicle, such as a seat, table, cold box, icebox, AV set etc. the fixed base is the floor of the vehicle, on which the profiled rail is mounted in the direction of travel of the vehicle.

### LIST OF FIGURES

In the following, the invention will be described in detail with reference to embodiment examples and the attached drawing, wherein

Fig. 1 is a diagrammatic rear view of a mount assembly, especially for a seat in a vehicle, which has been fastened to a fixed base by an embodiment of the fastening system of the invention,

Fig. 2 presents section II-II taken from Fig. 1.

Fig. 3 presents a detail of Fig. 1 when the locking element is in the locked position, and

Fig. 4 presents a detail corresponding to Fig. 3 when the locking element is in the released position.

### DETAILED DESCRIPTION OF THE INVENTION

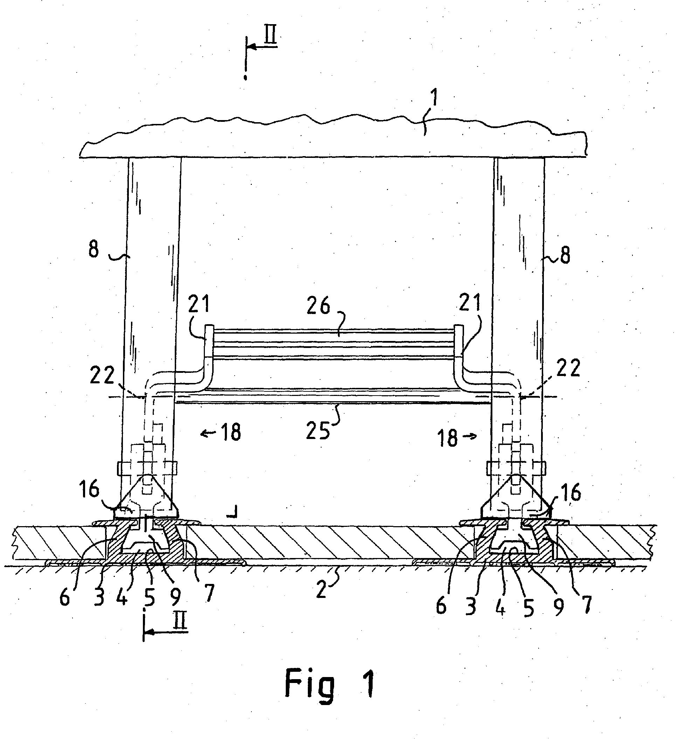

Figures 1 - 4 present an example of the fastening system, applied to provide detachable fastening of a piece of furniture 1 and/or other equipment, such as a seat, table, cold box, icebox etc., to the base plate 2 of a vehicle.

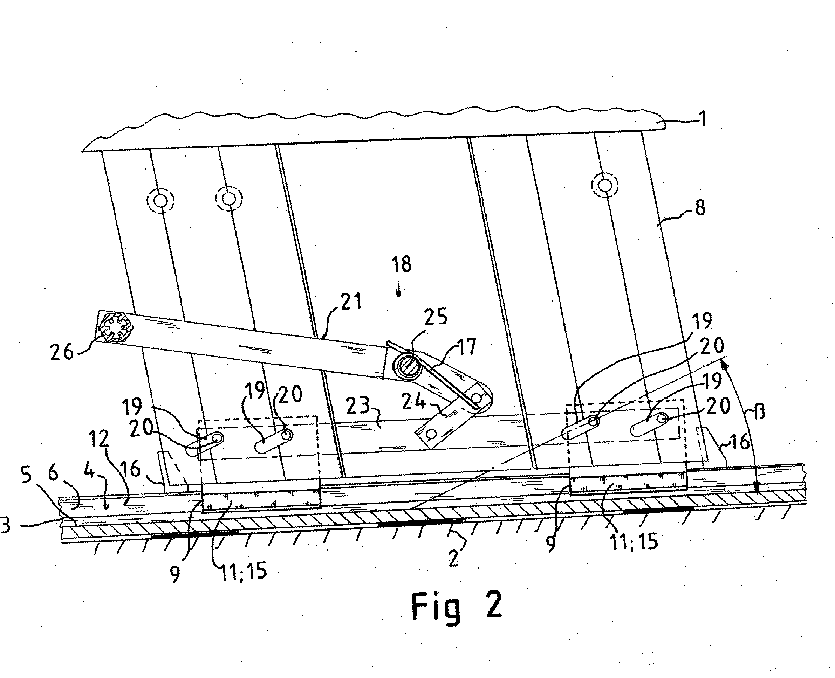

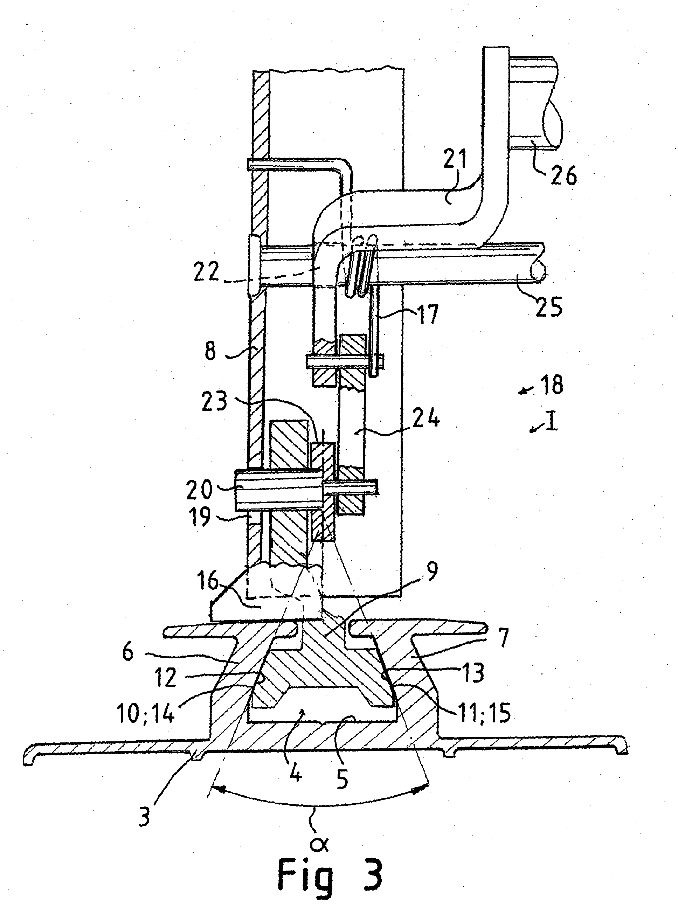

Referring to Fig. 1 and 2, two profiled rails 3 are fixed to the base plate 2 at a distance from each other so that they extend in the direction of travel of the vehicle. Each profiled rail 3 comprises a groove 4, whose interior space is defined by a bottom 5 and two opposite side walls 6, 7. The side walls 6, 7 of the groove 4 are provided with first wedge surfaces 12, 13, which are of planar form and placed at an angle α relative to each other, said angle opening towards the fixed base 2 (see also Fig. 3).

The piece of furniture 1 is connected to a mount assembly comprising two mount halves 8, which are fixedly connected to each other by a transverse bar 25 to keep them at a mutual distance corresponding to the distance between the profiled rails.

Incorporated in each mount half 8 is a locking element 9, which extends into the groove 4 of the corresponding profiled rail 3. The locking element 9 comprises stop faces 10, 11 facing away from each other. The stop faces 10 and 11 are elongated and planar surfaces disposed at a sharp angle α opening towards the fixed base 2, which angle is substantially equal to the angle α between the first wedge surfaces 12, 13, the stop faces constituting second wedge surfaces 14, 15, which can be pressed against the first wedge surfaces 11, 12 to produce between the locking element 9 and the profiled rail 3 a frictional engagement that gets wedged by the effect of the load.

A supporting element 16 is attached to the mount 8 and fitted to be continuously supported by and on the profiled rail 3. Thus, the entire weight of the piece of furniture is continuously applied via the supporting element 16 to the profiled rail 3.

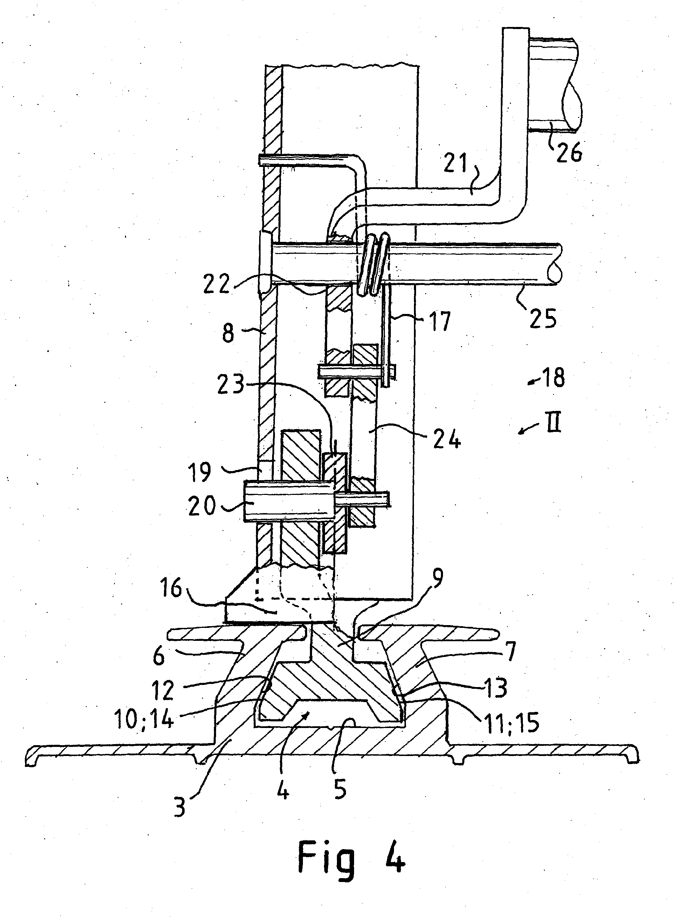

A spring 17 has been arranged to act between the mount 8 and the locking element 9 to press the second wedge surfaces 14, 15 continuously against the first wedge surfaces 12, 13 so that the spring acts to maintain the locked state. The element can be released from the locked state by means of a releasing device 18, which has been arranged to act on the locking element 9 so as to move the locking element relative to the mount 8 against the spring force of the spring 17 from the locked position I shown in Fig. 3, in which the second wedge surfaces 14, 15 are presented against the first wedge surfaces 12, 13, to the released position II shown in Fig. 4, in which the second wedge surfaces 14, 15 are separated from the first wedge surfaces 12, 13, and in which released position the mounts 8 can be moved along the profiled rail 3. The supporting element 16 is made of a material, e.g. plastic, that has a low coefficient of friction against the profiled rail 3 to allow easy movement of the supporting element 16 on the profiled rail 3 in the situation illustrated in Fig. 4, when the wedge surfaces are separated from each other.

As can be seen from Fig. 2, the locking element 9 has been arranged to be movable in relation to the mount 8 at a sharp angle β with respect to the longitudinal direction of the profiled rail 3, said angle opening in the main direction of forward travel of the vehicle. The locking element 9 is an elongated profiled body, which is connected to the mount 8 by a pin-and-slot joint 19,20, which comprises an elongated slot 19 disposed at the aforesaid sharp angle β with respect to the longitudinal direction of the profiled rail 3, said angle opening in the main direction of forward travel of the vehicle. The slot 19 of the pin-and-slot joint is comprised in the mount 8 and the pin 20 is comprised in the locking element 9. Due to the slot disposed at an angle, in a sudden crash situation the slot will cause the locking element 9 to rise so that the second wedge surfaces 14, 15 of the locking element 9 get still more tightly wedged against the first wedge surfaces 12, 13 of the groove 4.

Referring to Fig. 2, each mount half 8 comprises two successive locking elements 9 placed in the groove 4 of the same profiled rail 3. The locking elements 9 are supported on the mount half 8 at a distance from each other and connected together by a connecting bar 23. The releasing device 18 has been fitted to act on all the locking elements 9 simultaneously. The releasing device 18 comprises a turning lever 21 pivotally connected to the mount half 8 by a joint 22. A connecting lever 24 is pivotally connected by one end to the connecting bar 23 and by the other end pivotally connected to the turning lever 21 at a distance from the joint 22.

It can be seen from Fig. 1 and 2 that an operating handle 26 is fastened to the turning levers 21 of each mount half 8 to allow them to be operated simultaneously by a single movement of the operating handle 26. As shown in Fig. 2, the transverse operating handle 28 extends out from between the mount halves 8 so that a person can easily grip the operating handle 26 by hand.

In Fig. 3, the system is in the locked position I, in which the spring is pulling the locking element 9 upwards by means of the connecting lever 24 and the connecting bar 23, holding the second wedge surfaces 14, 15 of the locking element 9 against the first wedge surfaces 12, 13 of the groove 4.

In Fig. 4, the turning lever 21 has been turned so that the turning lever 21 has pushed the locking element 9 by means of the connecting lever 24 and the connecting bar 23 downwards to the released position II, in which the second wedge surfaces 14, 15 of the locking element 9 are separated from the first wedge surfaces 12, 13 of the groove 4.

The invention is not limited to the embodiment examples described above; instead, many variations are possible within the scope of the inventive concept defined in the claims.

## Claims

1. A fastening system for detachably fastening an object (1) to a fixed base (2), said system comprising
- an elongated profiled rail (3) fitted to be fastened to the fixed base (2), which profiled rail comprises a groove (4) with an interior space defined by a bottom (5) and two opposite side walls (6, 7),
- a mount (8), to which the object (1) is connected,
- a locking element (9), which is connected to the mount (8) and fitted to the groove (4) of the profiled rail (3) and which locking element comprises stop faces (10, 11) facing away from each other, which can be pressed against the side walls (6, 7) of the groove (4) to produce a frictional engagement between the locking element and the profiled rail, **characterized in that**
the side walls (6, 7) of the groove (4) comprise first wedge surfaces (12, 13), which are of planar form and mutually disposed at an angle (α) opening towards the fixed base (2);
that the stop faces (10, 11) of the locking element (9) are of planar form and mutually disposed at a sharp angle opening towards the fixed base (2), said angle being substantially equal to the angle (α) between the first wedge surfaces (12, 13), said stop faces constituting second wedge surfaces (14, 15), which can be pressed against the first wedge surfaces (11, 12) so that the frictional engagement produced will grow stronger as the load increases, due to the wedging effect;
and that the fastening system comprises a supporting element (16) fastened to the mount (8) and fitted to be supported on the profiled rail (3); a spring (17) arranged to act between the mount (8) and the locking element (9) to press the second wedge surfaces (14, 15) against the first wedge surfaces (12, 13); and a releasing device (18) arranged to act on the locking element (9) to move the locking element relative to the mount (8) against the spring force of the spring (17) from a locked position (I), in which the second wedge surfaces (14, 15) lie against the first wedge surfaces (12, 13), to a released position (II), in which the second wedge surfaces (14, 15) are separated from the first wedge surfaces (12, 13) and in which released position the mount (8) can be moved along the profiled rail (3).

2. A fastening system according to claim 1, **characterized in that** the locking element (9) has been arranged to be movable relative to the mount (8) at a sharp angle (β) with respect to the longitudinal direction of the profiled rail (3).

3. A fastening system according to claim 2, **characterized in that** the locking element (9) is an elongated profiled body, which is connected to the mount (8) by a pin-and-slot joint (19, 20) comprising an elongated slot (19) disposed at a sharp angle (β) relative to the longitudinal direction of the profiled rail (3).

4. A fastening system according to claim 3, **characterized in that** the slot (19) of the pin-and-slot joint is comprised in the mount (8) and the pin (20) is comprised in the locking element (9).

5. A fastening system according to any one of claims 1 - 4, **characterized in that** the supporting element (16) has been formed from a material having a low coefficient of friction against the profiled rail (3) to allow the mount (8) to slide on the profiled rail.

6. A fastening system according to any one of claims 1 - 5, **characterized in that** the mount (8) comprises two or more successive locking elements (9) placed in the groove (4) of the same profiled rail (3).

7. A fastening system according to claim 6, **characterized in that** the releasing device (18) has been fitted to act on all the locking elements (9).

8. A fastening system according to any one of claims 1 - 8, **characterized in that** the releasing device (18) comprises
- a turning lever (21) pivotally connected to the mount (8) by a joint (22),
- transmission elements (23, 24) for translating the motion of the turning lever (21) into a motion of the locking element (9).

9. A fastening system according to claim 8, **characterized in that** the fastening system comprises two locking elements (9), which are supported on the mount (8) at a distance from each other; and that the transmission elements (23, 24) comprise
- a connecting bar (23) connecting the locking elements (9) to each other; and
- a connecting lever (24) pivotally connected at one end to the connecting bar (23) and at the other end pivotally connected to the turning lever (21) at a distance from the joint (22).

10. A fastening system according to any one of claims 1 - 9, **characterized in that** the fastening system comprises
- two profiled rails (3), which are fastened to the base (2) so that they lie parallel to each other at a distance from each other,
- two mounts (8) provided with locking elements (9) and releasing devices (18), said mounts being fixedly connected to each other by at least one transverse bar (25) so that they are mutually spaced by a distance corresponding to the distance between the profiled rails, the object (1) being fastened to said mounts, and
- an operating handle (26) connected to the releasing devices (18) of both mounts to allow them to be operated simultaneously by a single movement of the operating handle.

11. A fastening system according to any one of claims 1 - 10, **characterized in that** the object (1) is a piece of furniture and/or equipment in a vehicle, such as a seat, table, cold box, icebox, AV set etc.; and that the fixed base (2) is the floor of the vehicle, on which the profiled rail (3) is mounted in the direction of travel of the vehicle.

12. Use of the fastening system according to any one of claims 1 - 11
- in land vehicles, such as automobiles, e.g. in spacious taxi cabs, minibuses, cars, buses etc.
- in rail vehicles, such as trains, tram cars, subway cars etc.
- in waterborne vehicles, such as ships, hydrofoil vessels, hovercraft, boats etc.; and/or
- in airborne vehicles, such as airliners.

13. Use of the fastening system according to any one of claims 1 - 11 in buildings for detachably fastening pieces of furniture to the floor and/or wall.
